# EUROPEAN PATENT APPLICATION

(11) **EP 2 924 859 A1**
(43) Date of publication of application: **30.09.2015**
(21) Application number: 15160477.4
(22) Date of filing: 24.03.2015
(51) Int. Cl.: H02M 1/12, H02M 5/297

(54) **Power converting apparatus, control device of power converting apparatus, and control method of power converting apparatus**

(30) Priority: 26.03.2014 JP 2014063981
(71) Applicant: Kabushiki Kaisha Yaskawa Denki, Kitakyushu-shi, Fukuoka 806-0004 (JP)
(72) Inventor: Takase, Yoshiyasu, Kitakyushu-shi, Fukuoka 806-0004 (JP); Morimoto, Shinya, Kitakyushu-shi, Fukuoka 806-0004 (JP); Inomata, Kentaro, Kitakyushu-shi, Fukuoka 806-0004 (JP); Tanaka, Takashi, Kitakyushu-shi, Fukuoka 806-0004 (JP)
(74) Representative: Viering, Jentschura & Partner Patent- und Rechtsanwälte

(57) **Abstract**

A power converting apparatus includes a power converter, a controller, and a filter. Further, the controller includes a command generator, an estimator, a voltage error calculator, and an output voltage controller. The command generator is configured to generate an output voltage command. The estimator is configured to estimate the output voltage based on an output current of the power converter. The voltage error calculator is configured to calculate a voltage difference between the output voltage command and the estimated output voltage. The output voltage controller is configured to control the output voltage to suppress a resonance of the filter based on the voltage difference.

## Description

### BACKGROUND OF THE INVENTION

### Field of the Invention

The present disclosure relates to a power converting apparatus, a control device of the power converting apparatus, and a control method of the power converting apparatus.

### Description of the Related Art

Conventionally, there has been known, as a power converting apparatus, a matrix converter which directly converts a power of an AC power source into an AC power having a certain frequency and voltage, or a regenerative converter which performs power regeneration to the AC power source.

The power converting apparatus has a switching element such as a semiconductor switch, and performs the power conversion by switching the switching element. Accordingly, there may occur harmonic noise caused by the switching. Therefore, in the power converting apparatus, a filter may be provided on the input side.

In the case where the filter is provided on the input side, distortion may occur in the input current due to the resonance caused by a reactor and a capacitor constituting the filter. As a method of suppressing such distortion, for example, there is a technique of extracting an oscillation component included in the output current and adjusting an output current command on the basis of the oscillation component (see, e.g., International Application Publication No. WO2013/080744).

The technique of adjusting the output current command on the basis of the oscillation component included in the output current may deteriorate the responsiveness of the power conversion control due to interference of the resonance suppression control and the current control.

### SUMMARY OF THE INVENTION

In view of the above, the present disclosure provides a power converting apparatus capable of performing resonance suppression by a new resonance suppression technique, a control device of the power converting apparatus, and a control method of the power converting apparatus.

In accordance with an aspect, there is provided a power converting apparatus including: a power converter provided between an AC power source and a load; a controller configured to control an output voltage of the power converter to perform a power conversion control between the AC power source and the load; and a filter provided between the AC power source and the power converter. The controller includes a command generator configured to generate an output voltage command; an estimator configured to estimate the output voltage based on an output current of the power converter; a voltage error calculator configured to calculate a voltage difference between the output voltage command and the estimated output voltage; and an output voltage controller configured to control the output voltage to suppress a resonance of the filter based on the voltage difference.

With such configuration, it is possible to provide a power converting apparatus capable of suppressing the resonance, a control device of the power converting apparatus, and a control method of the power converting apparatus.

### BRIEF DESCRIPTION OF THE DRAWINGS

FIG. 1 is a diagram illustrating a configuration example of a power converting apparatus according to a first embodiment.
FIG. 2 is a diagram showing a configuration example of a bidirectional switch shown in FIG. 1.
FIG. 3 is a diagram showing a relationship between the input and output for one phase of a filter.
FIG. 4 is a diagram showing an example of a damping control using an input current.
FIG. 5 is a block diagram of an estimation unit for estimating an output voltage error.
FIG. 6 is a diagram showing a configuration example of an output voltage controller.
FIG. 7 is a diagram illustrating a configuration example of a control unit that performs processing in dq coordinates.
FIG. 8A is a diagram showing a configuration example of a d-axis damping controller.
FIG. 8B is a diagram showing a configuration example of a q-axis damping controller.
FIG. 9 is an example of a flowchart showing a flow of control processing of an output voltage by the control unit.
FIG. 10 is a diagram showing a configuration example of a command generator according to a second embodiment.
FIG. 11 is a diagram showing a configuration example of the command generator that performs processing in the dq coordinates.

### DESCRIPTION OF THE EMBODIMENTS

Hereinafter, a power converting apparatus, a control device of the power converting apparatus, and a control method of the power converting apparatus in accordance with embodiments of the present disclosure will be described in detail with reference to the accompanying drawings. Further, a description will be made using a matrix converter as an example of the power converting apparatus. However, the present disclosure is not limited to the embodiments.

### <1. First Embodiment>

### <1.1. Configuration example of power converting apparatus >

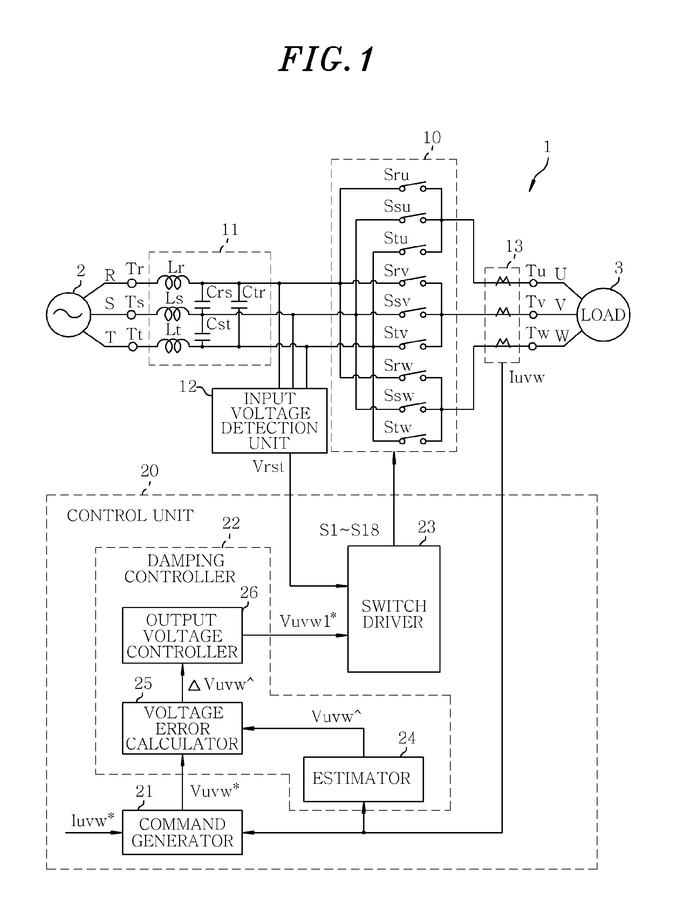

FIG. 1 is a diagram illustrating a configuration example of a power converting apparatus according to a first embodiment. As shown in FIG. 1, the power converting apparatus 1 according to the first embodiment is a matrix converter which is provided between a three-phase AC power source 2 (hereinafter, simply referred to as "AC power source 2") and a three-phase AC load 3 (hereinafter, simply referred to as "load 3").

The AC power source 2 is, for example, a power system. The load 3 is, for example, an AC motor or AC generator. In the following description, the R phase, the S phase and the T phase of the AC power source 2 are referred to as "input phases," and the U phase, the V phase and the W phase of the load 3 are referred to as "output phases."

The power converting apparatus 1 includes input terminals Tr, Ts, and Tt, output terminals Tu, Tv, and Tw, a power conversion unit (e.g., a power converter) 10, a filter 11, an input voltage detection unit 12, an output current detection unit (e.g., a current detector) 13, and a control unit (e.g., a controller or a control device) 20.

The power conversion unit 10 includes a plurality of bidirectional switches Sru, Ssu, Stu, Srv, Ssv, Stv, Srw, Ssw and Stw (hereinafter sometimes collectively referred to as "bidirectional switch Sw") connecting each phase of the AC power source 2 and each phase of the load 3.

The bidirectional switches Sru, Ssu, and Stu connect the R phase, the S phase and the T phase of the AC power source 2 with the U phase of the load 3, respectively. The bidirectional switches Srv, Ssv and Stv connect the R phase, the S phase and the T phase of the AC power source 2 with the V phase of the load 3, respectively. The bidirectional switches Srw, Ssw and Stw connect the R phase, the S phase and the T phase of the AC power source 2 with the W phase of the load 3, respectively.

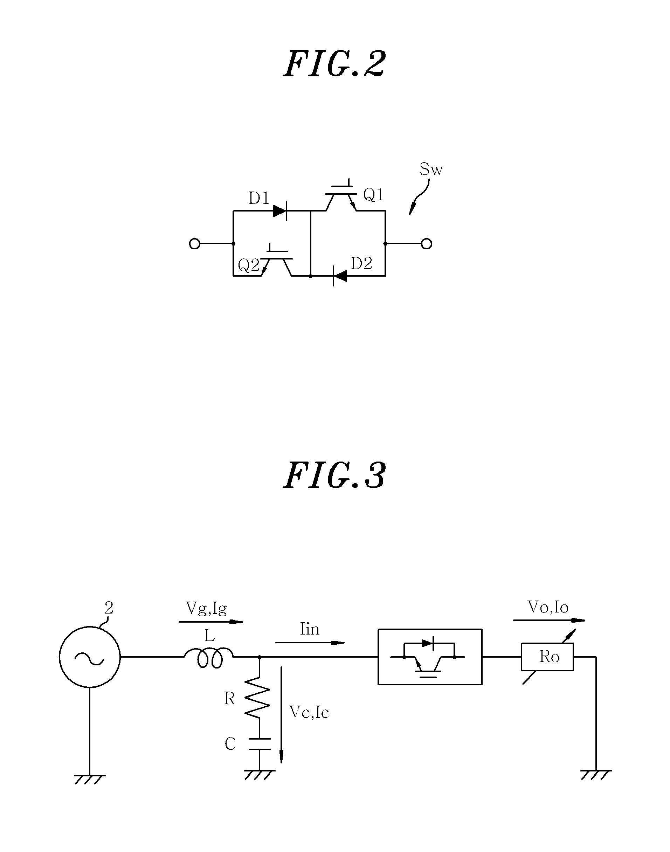

FIG. 2 is a diagram showing a configuration example of the bidirectional switch Sw. As shown in FIG. 2, the bidirectional switch Sw has a series circuit of a switching element Q1 and a diode D1 and a series circuit of a switching element Q2 and a diode D2, and these series circuits are connected in an inverse-parallel manner.

The bidirectional switch Sw may have any configuration without being limited to the configuration shown in FIG. 2. For example, in the example shown in FIG. 2, the cathodes of the diodes D1 and D2 are connected to each other, but the bidirectional switch Sw may be configured such that the cathodes of the diodes D1 and D2 are not connected to each other.

Each of the switching elements Q1 and Q2 is a semiconductor switching element such as a metal-oxide-semiconductor field-effect transistor (MOSFET) or an insulated gate bipolar transistor (IGBT). Further, each of the switching elements Q1 and Q2 may be, e.g., a wide band gap semiconductor containing gallium nitride (GaN) or silicon carbide (SiC). If each of the switching elements Q1 and Q2 is, e.g., a reverse blocking type IGBT, the diodes D1 and D2 may not be provided.

Gate signals S1 to S9 are inputted to the gates of the switching elements Q1 of the bidirectional switches Sru, Ssu, Stu, Srv, Ssv, Stv, Srw, Ssw and Stw. Gate signals S10 to S18 are inputted to the gates of the switching elements Q2 of the bidirectional switches Sru, Ssu, Stu, Srv, Ssv, Stv, Srw, Ssw and Stw.

Returning to FIG. 1, the description of the power converting apparatus 1 will be continued. The filter 11 is provided between the R phase, the S phase and the T phase of the AC power source 2 and the power conversion unit 10 to remove switching noise caused by the switching of the bidirectional switch Sw constituting the power conversion unit 10.

The filter 11 is an LC filter including three reactors Lr, Ls and Lt and three capacitors Crs, Cst and Ctr. The reactors Lr, Ls and Lt are connected between the R phase, the S phase and the T phase of the AC power source 2 and the power conversion unit 10, respectively.

Each of the capacitors Crs, Cst and Ctr is connected between two different input phases. Specifically, the capacitor Crs is connected between the R phase and the S phase, the capacitor Cst is connected between the S phase and the T phase, and the capacitor Ctr is connected between the T phase and the R phase. Further, the filter 11 is not limited to the configuration shown in FIG. 1, and may have other configurations.

The input voltage detection unit 12 detects instantaneous voltages Vr, Vs and Vt (hereinafter, referred to as "input phase voltages Vr, Vs and Vt") of the R phase, the S phase and the T phase of the AC power source 2, respectively, which are inputted to the power conversion unit 10 from the AC power source 2. In the following description, the input phase voltages Vr, Vs and Vt may be referred to as "input phase voltage Vrst." Further, respective currents Ir, Is and It of the R phase, the S phase and the T phase of the AC power source 2 may be referred to as "input phase current Irst" or "input current Iin."

The output current detection unit 13 detects instantaneous currents Iu, Iv and Iw (hereinafter, referred to as "output phase currents Iu, Iv and Iw") of the currents flowing between the power conversion unit 10 and the U phase, the V phase and the W phase of the load 3, respectively. Further, the output current detection unit 13 detects the current by using, e.g., a Hall element that is a magneto-electric transducer.

In the following description, the output phase currents Iu, Iv and Iw may be referred to as "output phase current Iuvw" or "output current Io." Further, respective voltages Vu, Vv and Vw which are outputted to the U phase, the V phase and the W phase of the load 3 from the power conversion unit 10 (hereinafter, referred to as "output phase voltages Vu, Vv and Vw") may be referred to as "output phase voltage Vuvw" or "output voltage Vo."

The control unit 20 performs the power conversion control between the AC power source 2 and the load 3 by controlling the power conversion unit 10. The control unit 20 has a power running operation mode and a regenerative operation mode as operation modes to be executed.

In the power running operation mode, the control unit 20 controls the power conversion unit 10 such that a three-phase AC power supplied through the input terminals Tr, Ts and Tt from the AC power source 2 is converted into a three-phase AC power of an arbitrary voltage and frequency and outputted from the output terminals Tu, Tv, and Tw to the load 3.

In the regenerative operation mode, the control unit 20 controls the power conversion unit 10 such that a regenerative power supplied through the output terminals Tu, Tv, and Tw from the load 3 is converted into a three-phase AC power of a voltage and frequency of the AC power source 2 and supplied from the input terminals Tr, Ts and Tt to the AC power source 2.

### <1.2. Resonance suppression control>

The control unit 20 estimates the output phase voltage Vuvw on the basis of the output phase current Iuvw, and obtains an output voltage error ΔVuvw which is a difference between the estimated output phase voltage Vuvw and an output phase voltage command Vuvw*. The control unit 20 controls the output phase voltage Vuvw of the power conversion unit 10 so as to suppress the resonance of the filter 11 based on the output voltage error ΔVuvw. Accordingly, power conversion between the AC power source 2 and the load 3 is performed while suppressing the resonance of the filter 11. Hereinafter, the resonance suppression control of the control unit 20 will be described in more detail.

FIG. 3 is a diagram showing a relationship between the input and output for one phase of the filter 11. Further, the definition of each symbol shown in FIG. 3 is described below. For the sake of simplicity of description, in the example shown in FIG. 3, a damping resistor is added in series to the capacitors Crs, Cst and Ctr.
Vg: Output voltage of the AC power source 2
Ig: Output current of the AC power source 2
L: Inductance of the reactors Lr, Ls and Lt
R: Resistance of the damping resistor
C: Capacitance of the capacitors Crs, Cst and Ctr
Ic: Current (capacitor current) flowing through the capacitors Crs, Cst and Ctr
Vc: Terminal voltage (capacitor voltage) of the capacitors Crs, Cst and Ctr

From FIG. 3, the relationship represented by the following equation (1) can be obtained. In a symbol of a combination of upper and lower cases in the following equation (1) and the like, the lower case may be represented by a subscript. ${ \begin{matrix}{V}_{g} - {V}_{c} = {LsI}_{g} \\ {V}_{c} = \left(\frac{1}{Cs}+R\right) ⁢ {I}_{c} \\ {I}_{g} = {I}_{in} + {I}_{c}\end{matrix}$

A transfer function of the following equations (2) and (3) is established from the above equation (1). ${G}_{2} \left(s\right) = \frac{{I}_{g}}{{V}_{in}} = \frac{Cs}{{LCs}^{2} + RCs + 1}$ ${G}_{1} \left(s\right) = \frac{{I}_{g}}{{I}_{in}} = \frac{RCs + 1}{{LCs}^{2} + RCs + 1}$

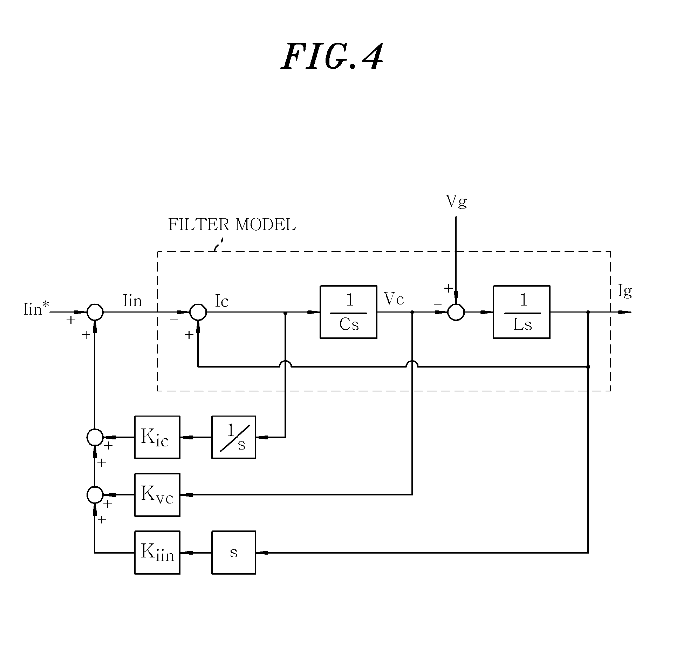

In the above equations (2) and (3), if Rd = 0 is satisfied, that is, a damping term does not exist, the resonance of the filter 11 is not suppressed. FIG. 4 is a diagram showing an example of the damping control using the input current Iin, and the transfer function of the source current and the input current is expressed in the following equation (4). Further, Kic, Kvc and Kiin are coefficients (gains). ${G}_{1} \left(s\right) = \frac{{I}_{g}}{{{I}_{in}}^{*}} = \frac{1}{{LCs}^{2} ⁢ \left({LK}_{vc}+{LCK}_{ic}-{K}_{iin}\right) ⁢ s + 1}$

From the above equation (4), it can be seen that it is possible to suppress the resonance of the filter 11 by feeding one of the following currents (a) to (c) back to the input current Iin:
(a) current including an integral term of the capacitor current Ic
(b) current proportional to the capacitor voltage Vc
(c) current including a derivative term of the source current Ig.

Since the input side and the output side of the power converting apparatus 1 are combined by the active power, the oscillation component ΔVc (hereinafter sometimes referred to as "resonance component ΔVc") of the capacitor voltage Vc generated by the resonance of the filter 11 may be estimated based on an output voltage error ΔVo that is the oscillation component of the output voltage Vo. Therefore, the control unit 20 estimates the output voltage error ΔVo, and suppresses the resonance of the filter 11 by feeding the current proportional to the estimated output voltage error ΔVo back to the input current Iin.

Here, a relationship between the input and output of the power conversion unit 10 can be expressed by the following equation (5) using duty ratios dur, dus, dut, dvr, dvs, dvt, dwr, dws, and dwt of the bidirectional switches Sru, Ssu, Stu, Srv, Ssv, Stv, Srw, Ssw, and Stw. ${ \begin{matrix}{V}_{uvw} = {DV}_{rst} \\ {I}_{rst} = {D}^{T} ⁢ {I}_{uvw}\end{matrix}$ $D = \left[\begin{matrix}{d}_{ur} & {d}_{us} & {d}_{ut} \\ {d}_{vr} & {d}_{vs} & {d}_{vt} \\ {d}_{wr} & {d}_{ws} & {d}_{wt}\end{matrix}\right]$

From the above equation (5), the oscillation component ΔVc of the capacitor voltage Vc can be expressed by the following equation (6). ${ΔV}_{c} = {D}^{- 1} ⁢ {ΔV}_{0}$

The estimated value of the output voltage error ΔVo (hereinafter sometimes referred to as "output voltage error estimation ΔVo^") can be estimated from the output current Io and an output voltage command Vo*, for example, as shown in the following equation (7). Further, "G_{f}" is a transfer function of the filter extracting the resonance component. ${Δ ⁢ \hat{V}}_{0} = {G}_{f} ⁢ \left({LsI}_{0}-{{V}_{0}}^{*}\right)$

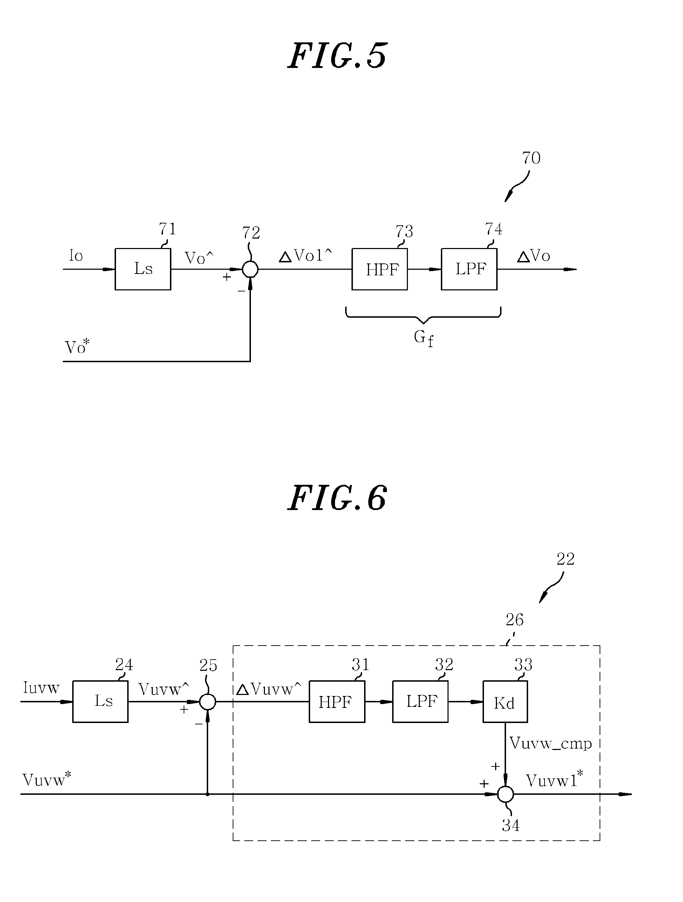

FIG. 5 is a block diagram of an estimation unit 70 for estimating the output voltage error ΔVo. The estimation unit 70 includes a differentiator 71, a subtractor 72, a high-pass filter (HPF) 73, and a low-pass filter (LPF) 74.

The differentiator 71 calculates the output voltage estimation Vo^ by differentiating the output current Io and multiplying the reactance L. The subtractor 72 calculates an output voltage error estimation ΔVo1^ by subtracting the output voltage command Vo* from the output voltage estimation Vo^.

The high-pass filter 73 has a cut-off frequency lower than the resonance frequency of the filter 11 to reduce a difference between the output voltage error estimation ΔVo^ and the resonance frequency component of the filter 11 included in the output voltage error estimation ΔVo1^. Further, the low-pass filter 74 has a cut-off frequency higher than the resonance frequency of the filter 11 to remove noise included in the output voltage error estimation ΔVo1^, which is outputted as the output voltage error estimation ΔVo^.

From the above equations (6) and (7), the oscillation component ΔVc of the capacitor voltage Vc can be expressed as the following equation (8). ${ΔV}_{c} = {D}^{- 1} ⁢ {ΔV}_{0} = {D}^{- 1} ⁢ {G}_{f} ⁢ \left({LsI}_{0}-{{V}_{0}}^{*}\right)$

In addition, a relationship between a resonance component ΔIin of the input current Iin caused by the filter 11 and an oscillation component ΔIo (hereinafter sometimes referred to as "resonance component ΔIo") of the output current Io necessary for compensation can be expressed by using an input-output matrix D as the following equation (9). ${ΔI}_{0} = {\left({D}^{T}\right)}^{- 1} ⁢ {ΔI}_{in}$

When feeding the current proportional to the capacitor voltage Vc back to an input current command Iin*, the above equation (9) can be expressed as the following equation (10). In the following equation (10), "Kd" is a proportional coefficient, which corresponds to the "Kvc" shown in FIG. 4. ${ΔI}_{0} = {\left({D}^{T}\right)}^{- 1} ⁢ {ΔI}_{in} = {\left({D}^{T}\right)}^{- 1} ⁢ {K}_{d} ⁢ {ΔV}_{c}$

Therefore, from the above equations (8) and (10), a relationship between the resonance component ΔVc of the capacitor voltage Vc and the current and voltage of the output side can be expressed as the following equation (11). ${ΔI}_{0} = {\left({D}^{T}\right)}^{- 1} ⁢ {K}_{d} ⁢ {ΔV}_{c} = {\left({D}^{T}\right)}^{- 1} ⁢ {K}_{d} \left\{{D}^{- 1}⁢{G}_{f}⁢\left({LsI}_{0}-{{V}_{0}}^{*}\right)\right\} = \left\{{\left({D}^{T}\right)}^{- 1}⁢{D}^{- 1}\right\} ⁢ {K}_{d} \left\{{G}_{f}⁢\left({LsI}_{0}-{{V}_{0}}^{*}\right)\right\}$

If an input power factor of the power converting apparatus 1 is set to "1", Vrst = K×Irst is established. Therefore, it is possible to derive the following equation (12) from the equation (5). In the following equation (12), "K" is an input impedance, which is a positive value in the case of the power running operation mode, and a negative value in the case of the regenerative operation mode. ${V}_{uvw} = {DV}_{rst} = {DKI}_{rst} = DK \left({D}^{T}⁢{I}_{uvw}\right) = K \left({DD}^{T}\right) ⁢ {I}_{uvw}$

From the above equation (12), it can be seen that "K(DD^{T})" is equivalent to the output impedance. If the load 3 is an AC motor, the inductance Lo of the AC motor is dominant in the output impedance at the resonance frequency of the filter 11. Thus, "K(DD^{T}) can be approximated as in the following equation (13). In the following equation (13), "P" is a differential operator. $K \left({DD}^{T}\right) \approx \left[\begin{matrix}{PL}_{0} & 0 & 0 \\ 0 & {PL}_{0} & 0 \\ 0 & 0 & {PL}_{0}\end{matrix}\right]$

Thus, "(D^{T}) ⁻¹D⁻¹" in the equation (11) can be approximated as in the following equation (14). ${\left({D}^{T}\right)}^{- 1} ⁢ {D}^{- 1} = {\left({D}^{T}⁢D\right)}^{- 1} \approx K \left[\begin{matrix}{/ 1}_{{PL}_{0}} & 0 & 0 \\ 0 & {/ 1}_{{PL}_{0}} & 0 \\ 0 & 0 & {/ 1}_{{PL}_{0}}\end{matrix}\right] \approx \frac{K}{{L}_{0} ⁢ s}$

Thus, from the above equation (14), the equation (11) can be expressed as the following equation (15). ${ΔI}_{0} = \left\{{\left(DT\right)}^{- 1}⁢{D}^{- 1}\right\} ⁢ {K}_{d} ⁢ {G}_{f} ⁢ \left({LsI}_{0}-{{V}_{0}}^{*}\right) = \frac{{KK}_{d}}{{L}_{0} ⁢ s} ⁢ {G}_{f} ⁢ \left({LsI}_{0}-{{V}_{0}}^{*}\right)$

As can be seen from the above equation (15), it is possible to suppress the resonance of the filter 11 by controlling the output current Io. However, if the resonance frequency of the filter 11 is higher than a current control band, the resonance suppression by the control of the output current Io may be difficult.

Therefore, the power converting apparatus 1 according to the present embodiment suppresses the resonance of the filter 11 by controlling the output voltage Vo instead of the output current Io. From the above equation (15), a relational expression of the output voltage Vo can be expressed as the following equation (16). ${ΔV}_{0} = \left(Ls\right) ⁢ {ΔI}_{0} = \frac{Ls}{{L}_{0} ⁢ s} ⁢ {KK}_{d} ⁢ {G}_{f} ⁢ \left({LsI}_{0}-{{V}_{0}}^{*}\right) \approx {K}_{d} ⁢ {ʹG}_{f} ⁢ \left({LsI}_{0}-{{V}_{0}}^{*}\right)$

Hereinafter, a configuration of the control unit 20 that suppresses the resonance of the filter 11 on the basis of the output voltage error ΔVo will be described in detail.

### <1.3. Control unit>

As shown in FIG. 1, the control unit 20 includes a command generator 21, a damping controller 22, and a switch driver 23.

The command generator 21 has, e.g., a proportional integral (PI) controller. The command generator 21 generates an output phase voltage command Vuvw* (an example of an output voltage command) such that a deviation between an output phase current command (output current command) Iuvw* inputted to the command generator 21 and an output phase current Iuvw becomes zero. The output phase current command Iuvw* includes output phase current commands Iu*, Iv* and Iw* of the U phase, the V phase and the W phase, and the output phase voltage command Vuvw* includes output phase voltage commands Vu*, Vv* and Vw* of the U phase, the V phase and the W phase.

The damping controller 22 adjusts the output phase voltage command Vuvw* by an output voltage compensation Vuvw_cmp which is generated on the basis of the output phase current Iuvw, and outputs an output phase voltage command Vuvw1* thus adjusted to the switch driver 23. The damping controller 22 includes an estimator 24, a voltage error calculator 25, and an output voltage controller 26.

The estimator 24 calculates an output phase voltage estimation Vuvw^ (an example of the voltage error) based on the output phase current Iuvw. The output phase voltage estimation Vuvw^ includes estimated values (hereinafter, referred to as "output phase voltage estimations Vu^, Vv^ and Vw^") of the output phase voltages Vu, Vv and Vw.

The estimator 24 has, for example, a differentiator and an amplifier, and obtains the output phase voltage estimations Vu^, Vv^ and Vw^ by multiplying differential values of the output phase currents Iu, Iv and Iw by a differential gain Ki. In addition, the differential gain Ki is set to, e.g., the reactance L of the reactors Lr, Ls and Lt.

The voltage error calculator 25 calculates an output voltage error estimation ΔVuvw^, which is a difference between the output phase voltage command Vuvw* and the output phase voltage estimation Vuvw^. As a result, the resonance component of the filter 11 that is included in the output phase voltage estimation Vuvw^ is outputted from the voltage error calculator 25 as the output voltage error estimation ΔVuvw^.

The output voltage error estimation ΔVu^ is a difference between the output phase voltage command Vu* and the output phase voltage estimation Vu^. The output voltage error estimation ΔVv^ is a difference between the output phase voltage command Vv* and the output phase voltage estimation Vv^. The output voltage error estimation ΔVw^ is a difference between the output phase voltage command Vw* and the output phase voltage estimation Vw^.

The output voltage controller 26 adjusts the output phase voltage command Vuvw* on the basis of the output voltage error estimation ΔVuvw^, and outputs the output phase voltage command Vuvw* thus adjusted as the output phase voltage command Vuvw1*. FIG. 6 is a diagram showing a configuration example of the output voltage controller 26. As shown in FIG. 6, the output voltage controller 26 includes a high-pass filter (HPF) 31, and a low-pass filter (LPF) 32, an amplifier 33, and an adder 34.

The high-pass filter 31 has a cut-off frequency lower than the resonance frequency of the filter 11 to remove a component lower than the resonance frequency component of the filter 11 from the output voltage error estimation ΔVuvw^. The low-pass filter 32 has a cut-off frequency higher than the resonance frequency of the filter 11 to remove noise included in the output voltage error estimation ΔVuvw^.

Further, the high-pass filter 31 and the low-pass filter 32 are an example of a resonance voltage extractor. In the output voltage controller 26, a band-pass filter may be provided instead of the high-pass filter 31 and the low-pass filter 32.

The amplifier 33 (an example of a multiplication section) has a compensation gain Kd (an example of an adjustment gain), and generates the output voltage compensation Vuvw_cmp (an example of an adjustment amount) by multiplying the output voltage error estimation ΔVuvw^ outputted from the low-pass filter 32 by Kd. The amplifier 33 switches the compensation gain Kd between positive and negative values depending on whether the operation mode is the power running operation mode or the regenerative operation mode. For example, the amplifier 33 sets the compensation gain Kd to the positive value in the case of the power running operation mode, and sets the compensation gain Kd to the negative value in the case of the regenerative operation mode.

The output voltage compensation Vuvw_cmp includes an output voltage compensation Vu_cmp of the U phase, an output voltage compensation Vv_cmp of the V phase, and an output voltage compensation Vw_cmp of the W phase. The amplifier 33 generates the output voltage compensations Vu_cmp, Vv_cmp and Vw_cmp by multiplying each of the output voltage error estimations ΔVu^, ΔVv^ and ΔVw^ by the compensation gain Kd.

The adder 34 calculates the output phase voltage command Vuvw1* by adding the output voltage compensation Vuvw_cmp as an adjustment amount to the output phase voltage command Vuvw*. The output phase voltage command Vuvw1* includes output phase voltage commands Vu1*, Vv1* and Vw1*. The adder 34 calculates the output phase voltage commands Vu1*, Vv1* and Vw1* by adding the output voltage compensations Vu_cmp, Vv_cmp and Vw_cmp to the output phase voltage commands Vu*, Vv* and Vw*, respectively.

Returning to FIG. 1, the description of the control unit 20 will be continued. The switch driver 23 generates gate signals S1 to S18 based on the input phase voltage Vrst and the output phase voltage command Vuvw1*. The switch driver 23 outputs the generated gate signals S1 to S18 to the bidirectional switches Sru, Ssu, Stu, Srv, Ssv, Stv, Srw, Ssw and Stw of the power conversion unit 10.

For example, in a period in which the magnitude relationship between the input phase voltages Vr, Vs, and Vt does not change, the switch driver 23 uses the input phase voltages Vr, Vs, and Vt in decreasing order of magnitude as input phase voltages Ep, Em and En. The switch driver 23 converts the output phase voltage commands Vu1*, Vv1* and Vw1* into pulse width modulation (PWM) signals corresponding to the voltage values of the input phase voltages Ep, Em and En, respectively. The switch driver 23 generates the gate signals S1 to S18 by performing a commutation control process on the PWM signals.

Thus, the power converting apparatus 1 calculates the output voltage compensation Vuvw_cmp according to the output voltage error estimation ΔVuvw^ between the output phase voltage command Vuvw* and the output phase voltage estimation Vuvw^. The power converting apparatus 1 performs the control of the power conversion unit 10 on the basis of the output phase voltage command Vuvw1* adjusted by the output voltage compensation Vuvw_cmp. Accordingly, the power converting apparatus 1 may perform power conversion between the AC power source 2 and the load 3 while suppressing the resonance of the filter 11.

### <1.4. Configuration example using dq coordinates>

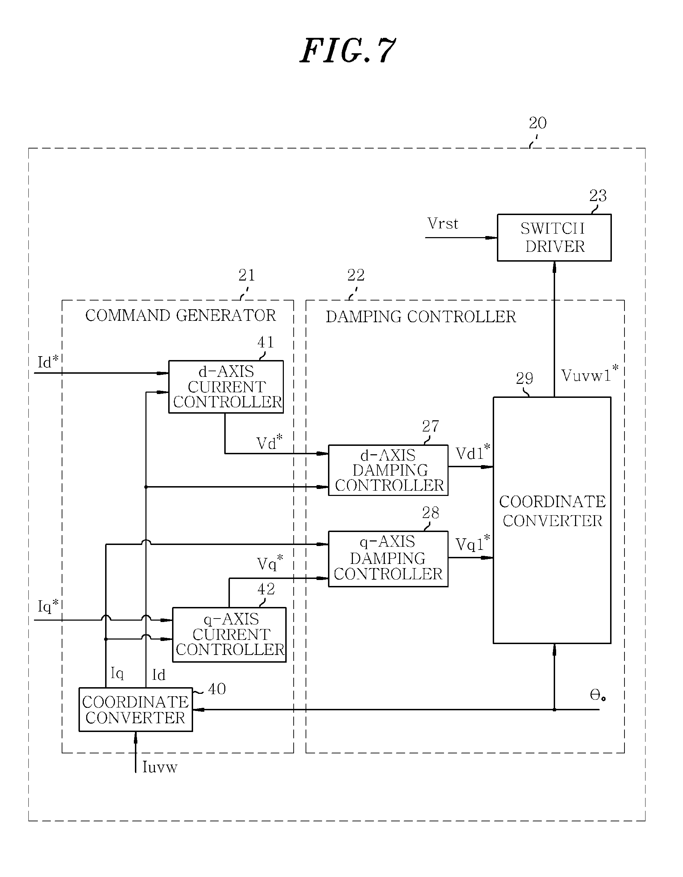

FIG. 7 is a diagram illustrating a configuration example of the control unit 20 performing the processing in the dq coordinates. The dq coordinates are coordinates of two orthogonal axes rotating according to a phase of the output phase voltage Vuvw (hereinafter referred to as "output voltage phase θo").

As shown in FIG. 7, the command generator 21 includes a coordinate converter 40, a d-axis current controller 41, and a q-axis current controller 42. The coordinate converter 40 converts the output phase current Iuvw from three-phase to two-phase so as to convert the output phase current Iuvw into a d-axis current Id and a q-axis current Iq, which are dq components of a dq coordinate system on the basis of the output voltage phase θo.

The d-axis current controller 41 generates a d-axis voltage command Vd* such that a deviation between the d-axis current Id and a d-axis current command Id* becomes zero. Also, the q-axis current controller 42 generates a q-axis voltage command Vq* such that a deviation between the q-axis current Id and a q-axis current command Iq* becomes zero.

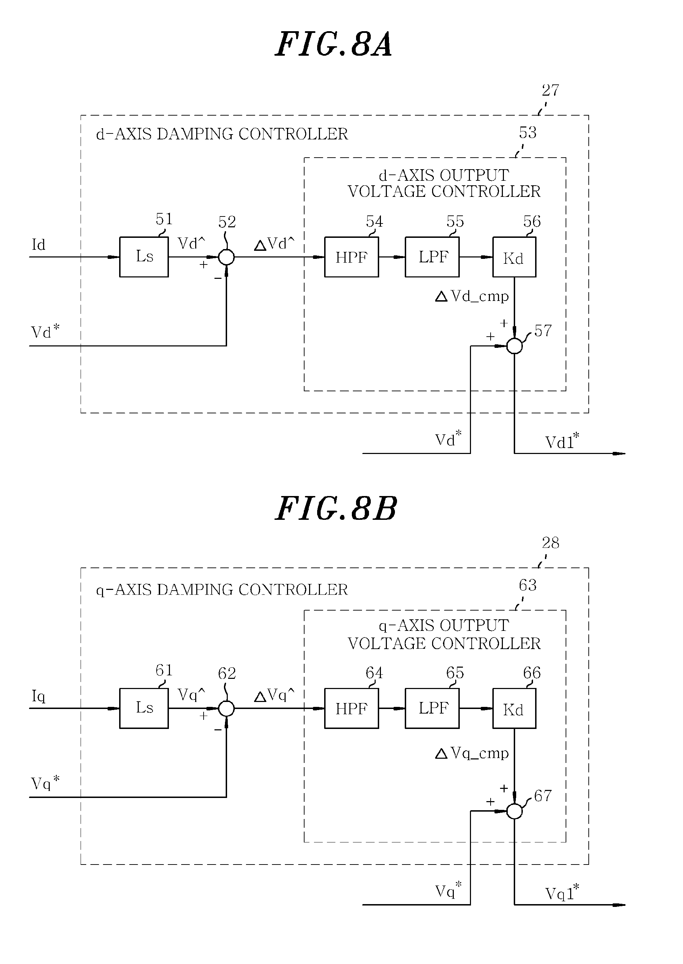

The damping controller 22 includes a d-axis damping controller 27, a q-axis damping controller 28, and a coordinate converter 29. FIG. 8A is a diagram showing a configuration example of the d-axis damping controller 27.

As shown in FIG. 8A, the d-axis damping controller 27 calculates a d-axis voltage estimation Vd^ that is an estimated value of a d-axis voltage Vd based on the d-axis current Id, and generates a d-axis voltage command Vd1* by adjusting the d-axis voltage command Vd* based on a d-axis voltage error estimation ΔVd^, which is a difference between the d-axis voltage command Vd* and the d-axis voltage estimation Vd^. The d-axis damping controller 27 includes a d-axis voltage estimator 51, a d-axis voltage error calculator 52, and a d-axis output voltage controller 53.

The d-axis voltage estimator 51 calculates the d-axis voltage estimation Vd^, for example, by multiplying a differential value of the d-axis current Id by the differential gain Ki. The d-axis voltage error calculator 52 calculates a difference between the d-axis voltage estimation Vd^ and the d-axis voltage command Vd*, and outputs the d-axis voltage error estimation ΔVd^. The d-axis output voltage controller 53 generates the d-axis voltage command Vd1* by adjusting the d-axis voltage command Vd* based on the d-axis voltage error estimation ΔVd^.

The d-axis output voltage controller 53 includes a high-pass filter 54, a low-pass filter 55, an amplifier 56, and an adder 57. The high-pass filter 54 has a cut-off frequency lower than the resonance frequency of the filter 11 to remove a component lower than the resonance frequency component of the filter 11 from the d-axis voltage error estimation ΔVd^. The low-pass filter 55 has a cut-off frequency higher than the resonance frequency of the filter 11 to remove noise included in the d-axis voltage error estimation ΔVd^.

The amplifier 56 has a compensation gain Kd, and generates a d-axis voltage compensation Vd_cmp by multiplying the d-axis voltage error estimation ΔVd^ outputted from the low-pass filter 55 by Kd. The adder 57 calculates the d-axis voltage command Vd1* by adding the d-axis voltage compensation Vd_cmp as an adjustment amount to the d-axis voltage command Vd*.

FIG. 8B is a diagram showing a configuration example of the q-axis damping controller 28. As shown in FIG. 8B, the q-axis damping controller 28 includes a q-axis voltage estimator 61, a q-axis voltage error calculator 62, and a q-axis output voltage controller 63. Also, the q-axis output voltage controller 63 includes a high-pass filter 64, a low-pass filter 65, an amplifier 66, and an adder 67. The q-axis damping controller 28 has a configuration obtained by replacing the d-axis component in the configuration of the d-axis damping controller 27 with the q-axis component.

Although not shown, the d-axis voltage estimator 51 and the q-axis voltage estimator 61 correspond to the estimator 24, the d-axis voltage error calculator 52 and the q-axis voltage error calculator 62 correspond to the voltage error calculator 25, and the d-axis output voltage controller 53 and the q-axis output voltage controller 63 correspond to the output voltage controller 26.

Returning to FIG. 7, the description of the control unit 20 will be continued. The coordinate converter 29 calculates the output phase voltage command Vuvw1* based on the d-axis voltage command Vd1*, the q-axis voltage command Vq1* and the output voltage phase θo. For example, the coordinate converter 29 calculates an amplitude M and a phase θa from the following equations (17) and (18), and generates the output phase voltage command Vuvw1* from the following equations (19) to (21). $M = \sqrt{{V}_{d} ⁢ {l}^{* 2} + {V}_{q} ⁢ {l}^{* 2}}$ ${θ}_{a} = {tan}^{- 1} \left({V}_{q}⁢{l}^{*}/{V}_{d}⁢{l}^{*}\right)$ ${{V}_{ul}}^{*} = M \times sin \left({θ}_{o}+{θ}_{a}\right)$ ${{V}_{vl}}^{*} = M \times sin \left({θ}_{o}+{θ}_{a}-2⁢π/3\right)$ ${{V}_{wl}}^{*} = M \times sin \left({θ}_{o}+{θ}_{a}+2⁢π/3\right)$

The control unit 20 is realized by a microcomputer having a central processing unit (CPU), a read only memory (ROM), a random access memory (RAM), input and output ports and the like, or an integrated circuit such as an application specific integrated circuit (ASIC) or field programmable gate array (FPGA).

The CPU performs some or all functions of the command generator 21, the damping controller 22 and the switch driver 23 by reading and executing a program stored in the ROM. Alternatively, the circuit including the ASIC or FPGA executes some or all functions of the command generator 21, the damping controller 22 and the switch driver 23.

### <1.5. Processing flow by the control unit 20>

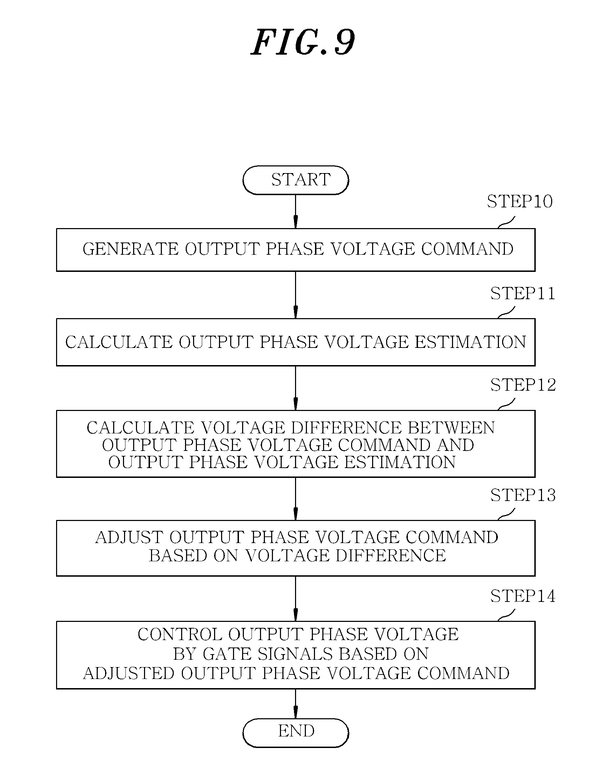

FIG. 9 is an example of a flowchart showing a flow of control processing of the output phase voltage Vuvw performed by the control unit 20. The control unit 20 repeatedly executes the control processing shown in FIG. 9 at predetermined cycles.

As shown in FIG. 9, the control unit 20 generates the output phase voltage command Vuvw* (Vd*, Vq*) such that a deviation between the output phase current command Iuvw* (Id*, Iq*) and the output phase current Iuvw (Id, Iq) becomes zero (Step 10). In addition, the control unit 20 calculates the output phase voltage estimation Vuvw^ (Vd^, Vq^) that is an estimated value of the output phase voltage Vuvw (Step 11). Then, the control unit 20 calculates the output voltage error estimation ΔVuvw^ (ΔVd^, ΔVq^) that is a difference between the output phase voltage command Vuvw* (Vd*, Vq*) and the output phase voltage estimation Vuvw^ (Vc^, Vq^) (Step 12). The control unit 20 adjusts the output phase voltage command Vuvw* (Vd*, Vq*) based on the output voltage error estimation ΔVuvw^ (ΔVd^, ΔVq^) (Step 13).

Next, the control unit 20 generates a PWM signal having a duty ratio based on the input phase voltage Vrst and the output phase voltage command Vuvw1* adjusted based on the output voltage error estimation ΔVuvw^ (ΔVd^, ΔVq^). The control unit 20 generates the gate signals S1 to S18 by performing a commutation control process on the PWM signal (Step 14). The control unit 20 may output the output phase voltage Vuvw, which is adjusted based on the output voltage error estimation ΔVuvw^, from the power conversion unit 10 by controlling the power conversion unit 10 by the gate signals S1 to S18.

### <2. Second Embodiment>

Next, a power converting apparatus according to a second embodiment will be described. The power converting apparatus according to the second embodiment is different from the power converting apparatus 1 according to the first embodiment in that it has a function of preventing interference of the current control. In addition, since the power converting apparatus according to the second embodiment is different from the power converting apparatus 1 in the configuration of the command generator, the command generator will only be described, and an illustration and description for the other configurations will be omitted.

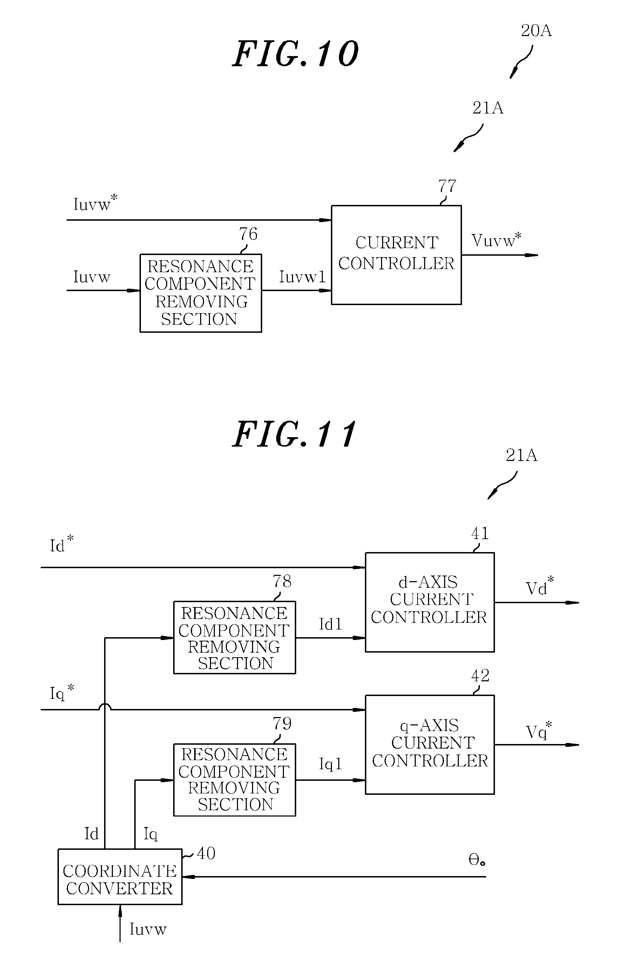

FIG. 10 is a diagram showing a configuration example of a command generator according to the second embodiment. As shown in FIG. 10, a command generator 21A of a control unit 20A according to the second embodiment includes a resonance component removing section 76 and a current controller (ACR) 77.

The resonance component removing section 76 is, for example, a notch filter, which removes an oscillation component ΔIuvw (hereinafter sometimes referred to as "resonance component ΔIuvw") of the output phase current Iuvw caused by the resonance of the filter 11. Specifically, the resonance component removing section 76 removes a component of a band including a resonance frequency f0 of the filter 11 from the output phase current Iuvw, and outputs an output phase current Iuvw1 in which the resonance component is removed.

The current controller 77 generates the output phase voltage command Vuvw* such that a deviation between the output phase current Iuvw1, in which the resonance component ΔIuvw is removed, and the output phase current command Iuvw* becomes zero.

FIG. 11 is a diagram showing a configuration example of the command generator 21A performing processing in the dq coordinates. As shown in FIG. 11, the command generator 21A includes resonance component removing sections 78 and 79 in addition to the configuration of the command generator 21.

The resonance component removing section 78 is, for example, a notch filter, which removes a d-axis component ΔId of the band including the resonance frequency f0 of the filter 11 from the d-axis current Id, and outputs a d-axis current Id1. The d-axis current controller 41 generates the d-axis voltage command Vd* such that a deviation between the d-axis current Id1 and the d-axis current command Id* becomes zero.

The resonance component removing section 79 is, for example, a notch filter, which removes a q-axis component ΔIq of the band including the resonance frequency f0 of the filter 11 from the q-axis current Iq, and outputs a q-axis current Iq1. The q-axis current controller 42 generates the q-axis voltage command Vq* such that a deviation between the q-axis current Iq1 and the q-axis current command Iq* becomes zero.

The control unit 20A executes, in addition, the step of removing the resonance component ΔIuvw (ΔId, ΔIq) from the output phase current Iuvw (Id, Iq) in Step 10 of FIG. 9. The control unit 20A generates the output phase voltage command Vuvw* (Vd*, Vq*) on the basis of the output phase current Iuvw (Id1, Iq1) in which the resonance component ΔIuvw (ΔId, ΔIq) is removed.

Thus, the command generator 21A according to the second embodiment generates the output phase voltage command Vuvw* (Vd*, Vq*) on the basis of the output phase current Iuvw (Id1, Iq1), in which the resonance component ΔIuvw (ΔId, ΔIq) is removed. Therefore, even in case where the resonance frequency f0 of the filter 11 is included in the control band of the current controller 77 (41, 42), it is possible to avoid interference of the resonance suppression control and the current control.

The control units 20 and 20A of the first and second embodiments, for example, may adjust the output voltage phase θo based on the resonance component ΔId instead of the adjustment of the voltage commands Vd* and Vq* using the resonance components ΔId and ΔIq.

The control units 20 and 20A of the first and second embodiments may generate the output voltage compensation Vuvw_cmp (Vd_cmp, Vq_cmp) corresponding to a ratio of the output voltage error estimation ΔVuvw^ (ΔVd^, ΔVq^) to the output phase voltage command Vuvw* (Vd*, Vq*). In this case, the control units 20 and 20A, for example, obtain the output phase voltage command Vuvw1* by multiplying the output voltage compensation Vuvw_cmp (Vd_cmp, Vq_cmp) by the output phase voltage command Vuvw* (Vd*, Vq*).

Further, although the description has been made using the configuration shown in FIG. 1 as an example of the power conversion unit 10, the power conversion unit 10 is not limited thereto. For example, the power conversion unit 10 may be configured by combining a pulse width modulation (PWM) converter and a PWM inverter without a main circuit capacitor.

Additional effects and modifications can be easily derived by those skilled in the art. Thus, the invention in its broader aspects is not limited to the specific details and representative embodiments as illustrated and described above. Therefore, it should be understood by those skilled in the art that various modifications, combinations, subcombinations and alterations may occur depending on design requirements and other factors insofar as they are within the scope of the appended claims or the equivalents thereof.

## Claims

1. A power converting apparatus comprising:
a power converter provided between an AC power source and a load;
a controller configured to control an output voltage of the power converter to perform a power conversion control between the AC power source and the load; and
a filter provided between the AC power source and the power converter,
wherein the controller includes:
a command generator configured to generate an output voltage command;
an estimator configured to estimate the output voltage based on an output current of the power converter;
a voltage error calculator configured to calculate a voltage difference between the output voltage command and the estimated output voltage; and
an output voltage controller configured to control the output voltage to suppress a resonance of the filter based on the voltage difference.

2. The power converting apparatus of claim 1, wherein the output voltage controller is configured to adjust the output voltage command by an adjustment amount obtained based on the voltage difference, and control the output voltage by controlling the power converter based on the adjusted output voltage command.

3. The power converting apparatus of claim 2, further comprising a current detector configured to detect the output current,
wherein an output current command is inputted to the command generator, and
wherein the command generator includes:
a resonance component removing section configured to remove a resonance frequency component of the filter from the output current detected by the current detector; and
a current controller configured to generate the output voltage command such that the output current from which the resonance frequency component is removed by the resonance component removing section is identical to the output current command.

4. The power converting apparatus of claim 2 or 3, wherein the output voltage controller includes:
a resonance voltage extractor configured to extract a resonance frequency component of the filter from the voltage difference; and
a multiplication section configured to obtain the adjustment amount by multiplying the extracted resonance frequency component by an adjustment gain.

5. The power converting apparatus of claim 4, wherein the output voltage controller switches the adjustment gain between positive and negative values depending on whether power conversion is performed from the AC power source to the load or from the load to the AC power source.

6. A control method of a power converting apparatus, comprising:
estimating an output voltage of a power converter provided between each phase of an AC power source and each phase of a load based on an output current of the power converter;
generating an output voltage command;
calculating a voltage difference between the estimated output voltage and the output voltage command; and
controlling the output voltage of the power converter to suppress a resonance of a filter provided between the AC power source and the power converter based on the voltage difference.

7. The control method of claim 6, wherein said controlling the output voltage includes controlling the output voltage by adding an adjustment amount obtained based on the voltage difference to the output voltage command and controlling the power converter based on the adjusted output voltage command.
